Europäisches Patentamt

European Patent Office

Office européen des brevets

(19)

(11) Publication number: **0 076 855**
**A1**

(12) **EUROPEAN PATENT APPLICATION**

published in accordance with Art. 158(3) EPC

(21) Application number: **81900950.7**

(22) Date of filing: **10.04.81**

Data of the international appli-
cation taken as a basis:

(86) International application number:
**PCT/JP 81/00086**

(87) International publication number:
**WO 82/03619 (28.10.82 82/26)**

(51) Int. Cl.³: **C 01 B 31/08, B 01 J 20/34**

(43) Date of publication of application: **20.04.83**
**Bulletin 83/16**

(84) Designated Contracting States: **CH DE FR GB LI SE**

(71) Applicant: **NODA, Yoshikazu, 11-8, Shinkamikosaka,
Higashiosaka-shi Osaka 578 (JP)**
Applicant: **SASAKI, Yoshiki, 37-98, Koaza Minagose
Oaza Kizu, Kizu-cho, Soraku-gun Kyoto 619-02 (JP)**

(72) Inventor: **SASAKI, Yoshiki, 37-98, Koaza Minagose Oaza
Kizu, Kizu-cho, Soraku-gun Kyoto 619-02 (JP)**

(74) Representative: **Meddie, Alan Leonard et al,
FORRESTER & BOEHMERT Widenmayerstrasse 4/I,
D-8000 München 22 (DE)**

(54) **APPARATUS FOR REGENERATING ACTIVATED CARBON.**

(57) An apparatus for regenerating used activated carbon particles, comprising a desorption furnace (11) forming a first half of a regeneration furnace wherein a desorption reaction of desorbing absorbed materials from used activated carbon particles is conducted through heating by an electric heating means, and a reactivation furnace (12) forming a second half of the regeneration furnace wherein a regeneration reaction is conducted by adding steam under heating, maintaining optimal conditions for the respective reactions by separately controlling voltages applied to electrode plates (17) and (38) in respective furnaces, providing more rocking or vibrating of said particles in said desorption furnace (11) than in said reactivation furnace (12) by means of either rocking mechanism (25), (26) and (29) or vibration mechanism (36), and conducting said addition of steam for the reactivation reaction only in said reactivation furnace, thus effectively and uniformly regenerating activated carbon particles while minimizing abrasion of the particles themselves.

SPECIFICATION

APPARATUS FOR RESTORING ACTIVATED CARBON

TITLE MODIFIED
see front page

FIELD OF THE INVENTION

The present invention relates to an apparatus for restoring activated carbon that has been used for some purposes, until the restoring process.

BACKGROUND OF THE INVENTION

The so-called activated sludge method has widely been utilized to purify the town sewage wherein the degree of water purification has not been perfect but only sufficient to the traditional standards. In the meantime a higher degree of the sewage purification is demanded nowadays, the degree being satisfied by means of the so-called tertiary treatment employing activated carbon. Organic contaminations contained in the sewage are eliminated in said treatment by a kind of physicochemical process.

In a further advanced system, the physicochemical process with use of the activated carbon is adopted also as a secondary treatment per se which has been carried out heretofore by using the activated sludge method. The primary treatment conducted prior to the secondary treatment is, in any case, based on a simple precipitation or on a flocking precipitation method. Such advanced system is proving to be of high practical value.

On the other hand, the abovementioned adsorption treatment with use of activated carbon is in general more

- 1 -

effective for the industrial drainage than is for the town sewage. Therefore, such adsorption treatment employing the activated carbon carries great weight with the field of industrial drainage treatment.

As well known, the activated carbon is a preferrable adsorbent agent that has a great adsorbability though it will become weaker and out of use when saturated. A restoring process is consequently required in order to repeatedly use the same activated carbon. It is to be noted here that the organic contaminations contained in water are in general some high polymers that have high boiling points. They can be scarcely desorbed from the activated carbon even if the desorption temperature were simply raised or a vacuum were applied. Therefore, the so-called heat reclaiming method is widely used to overcome such difficulty wherein a reaction such as occurs in the water gas production will take place at a temperature higher than 800°C and by supplying vapor. The organic substances adsorbed upon and in the carbon are effectively gasified and eliminated. The heat reclaiming method however inevitably results in a considerable loss of the carbon quantity, which loss is almost equivalent to a half of the total cost for the drainage treatment even when the loss could be made less than about 5 % by weight of the initial carbon.

Much effort has consequently been made to develop a better method and a better apparatus therefor for restoring the activated carbon. These attempts have however not succeeded heretofore, and the abovementioned heat reclaiming

- 2 -

method is still a dominant method in this field.

The heat reclaiming method will be explained below more in detail for a better comparison thereof with the present invention described fully hereinafter.

An amount of the activated carbon, which has lost its adsorbability, is discharged from an adsorbing tower so as to be drained before it is fed into a rotary kiln. The activated carbon is then, during its advance toward outlet within the kiln, dried (at 105°C), heated (organic substances being partially desorbed and carbonized at 100 to 700°C), more strongly heated at a temperature high enough to gasify the residual carbonized substances (800 to 850°C) and finally discharged from the kiln into a water bath to thereby be quenched. Some heating means are proposed to replace the externally heating method which is not so efficient for a thermal desorption of the substances adsorbed by the activated carbon within the reaction vessel. By one of the proposed heating means the activated carbon per se is electrified to generate the Joule's heat which is caused by the internal resistance of said carbon. By the other proposal a high voltage is charged upon the carbon granules so as to give rise to a spark discharge therebetween and to thereby directly heat them.

The abovedescribed heat reclaiming method has nevertheless the following disadvantages despite the utilization of said electrical direct heating means.

(i) The quality of the activated carbon granules unavoidably changes for the worse, the unfavorable

- 3 -

change being caused by both the shaking motion or vibration and the electrical heating. In this connection, there is no difference between the spark discharge and the electric conduction through said granules. The violent motion or vibration uniformly imparted to said granules during their advance toward the exit of said kiln will result in a pulverization to a considerable extent which in turn means a loss of activated carbon.

(ii) It is required in said known system to cause stepwise the serial set of reactions such as the drying, the heating (partially desorption of the organic compounds, i.e. desorbing process of the activated carbon) and then the gasification of residual carbonized compounds. These serial reactions must take place stepwise whilst said carbon granules continuously flow within the rotary kiln or the like. Therefore, it is extremely difficult to give a suitable heat respectively to each of the continuous flow sections if a single electrode plate were used for the electrical heating as usual in the known system. Even if one or more thermal sensors are disposed at any selected positions in order to control the charged voltage, it would be impossible to correctly adjust at the same time both the reaction temperatures of the neighboring two zones in the kiln.

(iii) It is usual in the known system that the wet

- 4 -

activated carbon is suddenly treated with an 0076855
electric current conducted therethrough, without
any preliminary processing thereof. Water contained
in said carbon will, in such case, begin to violently
boil simultaneously with the switching on of said
electric current. The thus produced vapor will
inevitably intercept the contact of said carbon
with the electrode surface. This in turn will
retard the start of an effective heating of the
activated carbon until the vapor disappears, thereby
the thermal efficiency being remarkably lowered.
A trial to supply the vapor after the effective
heating has started could not solve the problem
because the added vapor diffuses into the inlet
zone of the rotary kiln.

## DISCLOSURE OF THE INVENTION

An object of the invention is to provide an improved
system adapted to restore an amount of used activated carbon
wherein granules thereof are electrically heated, the adsorbed
substance is liberated, and said carbon is activated again.

Another object of the invention is to provide a restoring
apparatus comprising a restoring furnace including a primary
section and a secondary section which are separated from each
other so as to respectively perform the desorbing reaction
and the reactivating reaction in such a manner that both
the reactions are controlled to their optimal conditions,
respectively.

In the invented system, the temperatures of the above sections are independently controlled by adjusting voltages exerted thereto by means of opposite electrode plates. Thus, the activated carbon granules received in the sections can be heated with suitable amounts of thermal energies respectively given by the independently controlled voltages. Each of the abovementioned reactions will consequently progress at the optimal temperatures.

Besides, different degrees of the shaking motion or vibration are also respectively imparted to said granules within the primary and secondary sections. In the primary section a more violent motion or vibration is given to the granules so that they can repeat to be detached from and touch again each other against their high wetness which would otherwise make them to stick to each other. This violent vibration enables a more uniform heating of them and will also prevent the vapor from intercepting the good contact between the electrode surface and them.

In the secondary section of said furnace, a weaker vibration is imparted to the activated carbon granules since they have been already dried to a satisfactory degree in said primary section. Such moderate vibration will permit each of them to turn round about its center but inhibit them to collide with each other. This will protect them from defacement even under a high temperature of the secondary section.

Moreover, the said secondary section has also a means provided for supplying vapor exclusively thereinto so as to promote the reactivating reaction of said carbon. The supplied vapor cannot flow back into the primary section by virtue of suitable structures and arrangement of the sections, whereby the good contacts of said granules with said electrodes are well maintained in the primary section while preventing a recondensation of said vapor upon the carbon surfaces.

Other objects and advantages of the invention will become apparent in the course of following description of an embodiment with reference to the drawings.

### BRIEF DESCRIPTION OF THE DRAWINGS

Fig. 1 is a side elevational showing as a whole an apparatus in an embodiment of the invention;

Fig. 2 is a section of the apparatus taken along the line II - II in Fig. 1; and

Fig. 3 schematically illustrates a sewage purifier that may be operated in combination with the invented apparatus for restoring activated carbon.

### A PREFERRED EMBODIMENT OF THE INVENTION

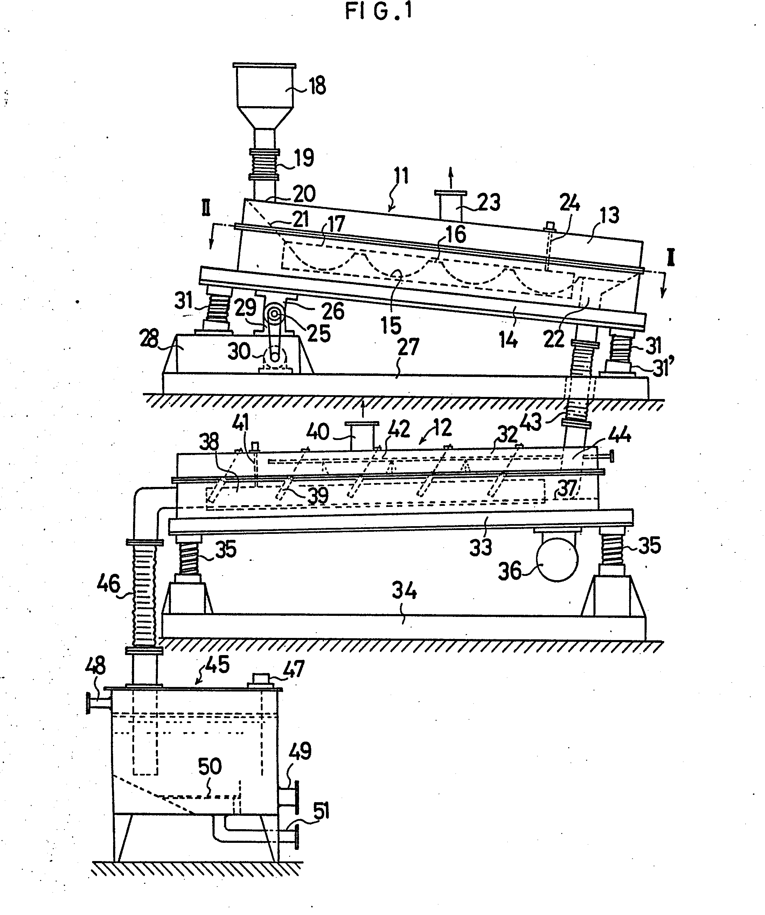

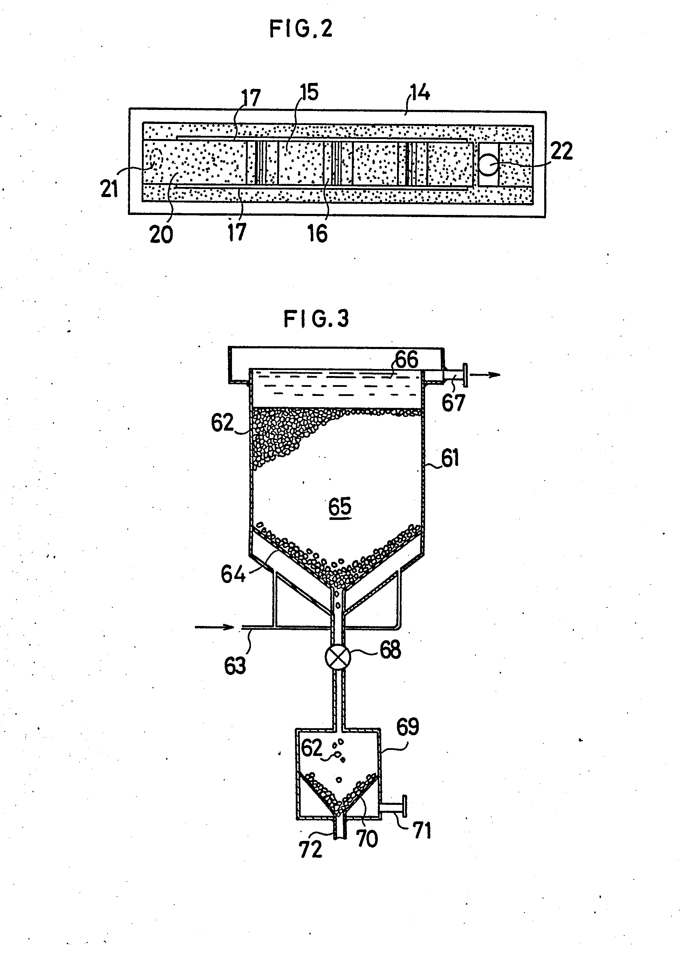

In Fig. 1 and 2, the numeral 11 indicates a box type desorption furnace provided as a primary section while the numeral 12 indicating a reactivation furnace also of a box type provided as a secondary section.

The desorption furnace 11 comprises a lid 13 and a receptacle 14 which is slanted with an inclination of about 10 degrees in its longitudinal direction. The receptacle 14 is lined internally with refractory bricks, castable refractory or other ceramics that are good insulators for electricity and heat. In the said lining material are formed at regular intervals a plurality of recesses 15 each having a semicircular shape when seen from a direction across the longitudinal direction. Each two of these recesses 15 are connected with one another with a narrow and plane dam 16 interposed therebetween to thereby provide a plurality of reaction chambers which are adapted also to function as a transfer passage for the used carbon granules to be reactivated. The numeral 17 indicates electrode plates made of carbon plate or any other electroconductive material such as stainless steel plate that are relatively heat-resisting and anticorrosive. Such electrode plates are arranged at each side of and along said passage to thereby form a pair thereof. In accordance with the passage length, two or more pairs of electrodes may be provided.

A hopper 18 constantly feeds the used carbon granules into the furnace 11. An inlet opening 20 provided at the end of said lid 13 is connected by an aseismatic duct 19 to a delivery outlet of said hopper 18. On the other hand, a slope 21 is provided below the inlet opening 20 so as to smoothly communicate it with said passage within the receptacle 14.

The carbon granules are discharged through an outlet opening 22 into the reactivation furnace 12 after desorption process has finished in the desorption furnace. The numeral 23 indicates a vent for exhausting a liberated gas, and the numeral 24 indicates a sensor for detecting the temperature of the desorption furnace.

There are provided a pair of bearings 26 at the uppermost end of an inclined bottom defining the receptacle 14 of said desorption furnace 11. The bearings are adapted to rotatably support eccentric portions of a driven shaft 25. The other pair of bearings 29 are fixed on a frame 28 of a bed 27 in such a manner that the shaft 25 may be rotatably supported by them. A variable speed motor 30 drives the shaft 25 by means of pulleys and a belt. The numeral 31 indicates pairs of coiled springs which are resiliently connect the receptacle 14 to the frame 28 and the bed 27.

The aforementioned reactivation furnace 12 similarly comprises a lid 32 and a receptacle 33 as in the desorption furnace 11. The receptacle 33 is slanted with a smaller inclination, in its longitudinal direction, than the above-said receptacle 14 of the desorption furnace is. Four coiled springs are resiliently fixing the receptacle 33 upon another bed 34. A vibrator 36 is secured to the middle portion of the uppermost end of said receptacle 33.

Refractory bricks, castable refractory or other ceramics are similarly lined onto the inside surface of said receptacle 33. A flat furnace bottom 37 is formed with the refractory bricks or the likes, and at least one pair of electrode plates 38 are embedded in the lining material on the opposite side walls. A plurality of baffles 39 are located at regular intervals between the opposite electrodes in such a manner as to be inclined with respect to the longitudinal direction of said electrodes 38. The baffles are made of the same
or similar insulating material as that of the lining and
adapted to be moved up and down so that the distances between
them and the furnace bottom can be adjusted to maintain
a good flow of the carbon granules notwithstanding a possible
change in their flowability.

The numeral 40 indicates a vent for exhausting a gas
produced during the reactivating reaction by the decomposition
of residual carbonized substances on the activated carbon
granules. The reactivation furnace 12 comprises also a
sensor 41 for temperature detection as well as a steam
pipe 42 for supplying steam thereinto through its spray
nozzles disposed at regular intervals. The induced steam will
accelerate said decomposition of carbonized substances on
the granules wherein a reaction similar to that in the water
gas production is deemed to take place between said substances
and the vapor.

An aseismatic duct 43 is a passage for the carbon
granules which have been processed in the desorption furnace
11 and are not to be transferred from the outlet opening 22
of said furnace 11 into the reactivation furnace 12 through
its inlet opening 44.

A still another component of the illustrated apparatus
is a water sealing device indicated generally at 45. This
device functions also as a quenching pool and is connected
with the reactivation furnace 12 by an upper pipe and a
lower pipe which are interconnected with an aseismatic duct
46 interposed therebetween. The lowermost end of said lower pipe is at the same height as that of a water level sensor 47 by virtue of which the level of said pool is kept at such a height that the lower portion of said lower pipe is always immersed in water.

The numeral 48 indicates a water supply pipe, and the numeral 49 depicts a discharge pipe through which the quenched reactivated granules are withdrawn under an air-purged state. A stainless steel net 50 is adapted to sift out usable reactivated carbon granules from pulverized fractions and residues of the desorbed substance which are forming a sludge within the pool. The sludge is exhausted through an outlet 51.

It will be appreciated that the desorption furnace 11 and the reactivation furnace 12 can be arranged such that the used granules flow in the same direction through both the furnaces. This means that it is not necessarily required to arrange said furnaces top and bottom as in the illustrated example wherein said granules are caused to turn back when they move into the lower, i.e. reactivation, furnace.

In operation of the above apparatus, the used activated carbon granules which are saturated with organic contaminations or the likes contained in sewage may be dehydrated at first by means of a screen or the like, and then charged into the hopper 18. Said granules are fed at a constant rate from the hopper through the aseismatic duct 19 via the slope 21 and into the passage 15 of the desorption furnace 11.

It is of course that prior to the start of said feed of granules the motor 30 should be switched on to rotate at a speed of, for instance, 600 to 1000 r.p.m. and the vibrator 36 also should be driven. Thus, the desorption furnace 11 continues its shaking motion caused by the eccentric portion of the shaft 25, i.e. shaking mechanism. A rolling motion as well as a pitching motion will be given to the receptacle 14 respectively in its inclination direction and in its direction perpendicular thereto. The used carbon granules slide along the slope 21 downward into the first recess 15 and move in a circle therein along its semicircular bottom. The amount of such granules gradually increases in the first recess, and a part of them will flow over the dam 16 to move into the second recess 15 and fill it with themselves. The third recess and the fourth recess are also filled with the carbon granules in a similar manner.

A voltage is charged between the electrode plates 17 so as to heat said granules which are shaking within each of the recesses 15 and colliding with one another to thereby advance ahead from one recess to the other subsequent recess. The voltage should be always kept at a strength most effective to the above purpose. A preliminary test will be conducted by means of the temperature sensor 24 in order to find the optimal voltage which gives the most desirable temperature in said recesses. A voltage controller (not shown) may automatically adjust the voltage in accordance with the temperature detected by the sensor 24.

Said recesses acting as reaction chambers are filled with the granules and therefore electrically are in their stabilized states which avoid any remarkable temperature uneveness therein. The used carbon granules are thus heated by the thermal energy most suitable for said desorbing reaction. Such condition just described is advantageous to avoid any degree of oxidation or wear and tear of the granules as well as any deterioration of the electrodes 17.

In practice, the first recess 15 serves as a drier (ca. 105°C) whereas the second to fourth recesses serve as heaters for heating the granules from 100°C up to 700°C. The adsorbed substances such as organic compounds are effectively desorbed from the granules and gasified to be exhausted outward through the vent 23 together with water vapor generated during the drying and heating process. The exhausted gas may be treated by appropriate means (not shown) in order to recover usable components contained therein and to eliminate noxious components.

After such desorption has finished, the granules will then be transferred from the furnace 11 through the aseismatic duct 43 into the reactivation furnace 12. It will be apparent that the thus transferred granules are not sticky since they have perfectly been dried already in the desorption furnace and almost the adsorbed substances have been carbonized therein accompanying the heat decomposition, oxidation and gasification thereof at about 700°C. A violent shaking motion as in the desorption furnace 11 needs not to be imparted to said granules within the reactivation furnace. A mild shaking of the slightly slanted bottom 37 caused by the vibrator 36 will be sufficient for the granules to advance forward while rotating in situ between the paired electrodes 38.

The baffles 39 disposed at suitable intervals ensure a constant transfer speed of the granules as well as a moderate storage thereof within each of the spaces respectively defined with two adjacent baffles. The distance between the lower ends of the baffles and the surface of the furnace bottom can be adjusted, if necessary, so as to change the storage condition in accordance with any change in the required capacity of reactivation or in the shape of granules.

The temperature sensor 41 produces an input signal fed into another voltage controller (not shown). The voltage charged on the electrodes 38 is adjusted by the controller by means of said input signal and the preset standard value corresponding to a desirable temperature in the reaction chamber formed within the furnace.

A gasification of the residual carbonized substances will thus take place at 800 to 850°C by electrically heating said granules. The resulting gasses flow out through the vent 40 for a subsequent device eliminating noxious components.

An appropriate quantity of water vapor may be added into the furnace by means of the steam pipe 42 through its nozzles (in most cases, ca. 0.2 kg of vapor per 1 kg of the activated carbon). The thus ejected vapor will favorably accelerate the reactivating reaction between it and the carbonized substances carried on the granules, said reaction gasifying said carbonized substances.

It will be appreciated that because of the weak vibration imparted to the granules during advance thereof within said reactivation furnace 12 the loss of said activated carbon resulting from its pulverization is negligible contrary to its usual tendency to wear away at such high temperature. The weak vibration allows the granules only to spin but not to collide with one another.

Thus, the used carbon granules are desorbed and reactivated respectively in the furnaces 11 and 12 while continuously flowing therethrough. The adsorbed substances are thereby desorbed from the carbon granules and gasified so that said granules can be refreshed perfectly without any unevenness in their reactivation degrees. Finally, they are thrown into the water sealing device 45 to be quenched therein without being affected by the environment air which would otherwise oxidize them to thereby bring about a loss thereof more or less.

The abovedescribed superior performance of the invented apparatus, namely no unevenness in the reactivation degrees among the granules, is indebted to the system enabling an extremely uniform heating thereof. Summarizing the system, especially in respect of the desorption furnace 11, the semicircular recesses 15 shake the granules to tumble therein and increase the granules amount received therein so as to make longer the storage period to thereby stable their electrical state. Moreover, the detected temperature of the furnace is utilized to automatically control the voltage charged between the electrodes 17 so that said granules can be kept at the desirable temperature. The violent, but not excessively strong, shaking motion imparted to said granules permit the frequent mutual contacts and dissociations thereof is very effective to avoid any local overcurrent through some granules. Such overcurrent, hence local heating, which is prevented here in the invention from becoming noticeable, is more apt to arise with a higher temperature because it lowers the electric resistance of the activated carbon.

The heating degree of the activated carbon granules must be adjusted in accordance with any remarkable change in the kind or nature of said carbon, the kind or concentrations of the adsorbed substances (in particular, organic compounds). Such adjustment will, in general, be carried out by means of not only alteration of the voltage charged on the electrodes 17 but also alteration of the granules motion in said recesses 15. The latter may be conducted by changing the speed of the motor 30 and/or by changing the inclination of the desorption furnace 11. As for the motor speed, no explanation will be needed. The inclination can be adjusted however in such a manner as to release engagement of the receptacle 14 with the frame 28 connected thereto by the left coiled spring 31 and regulate the height of a holder 31' for the right coiled spring 31, relative to the bed 27.

The inclination adjustment mechanism can be applied also to the reactivation furnace 12, if desirable. In such case, the vibrator 36 may be replaced with an eccentric shaft which has a smaller eccentricity than that of the eccentric shaft in the shaking mechanism of the desorption furnace 11. The adjustment of the baffles 39 can be conducted in the already shown manner.

Fig. 3 illustrates a sewage purifier that is operated in combination with the above apparatus for refreshing activated carbon. An adsorption tower 61 is filled with activated carbon granules 62 and adapted to flow sewage upwards therethrough.

In operation of the purifier, the raw sewage which has been processed with at least the aforementioned primary treatment is fed by a pipe 63 through a screen 64 and upwards into an adsorbent layer 65. Any amount of organic contaminations existing in the raw sewage is adsorbed by said layer and purified sewage will overflows outwards via an outlet 67.

In such process the activated carbon disposed at lower position will adsorb more amount of said contaminations so that they become saturated therewith sooner than that disposed at higher position of said layer. The saturated or used carbon granules 62 are withdrawn together with a certain amount of sewage at regular time intervals by an automatic discharger 68 disposed at the bottom of said tower so as to feed the withdrawn granules and sewage into a dehydrator 69. A punched board 70 of the dehydrator permits the raw sewage to pass therethrough, the sewage then flowing out of the dehydrator via an outlet 71 leading to unshown primary treatment equipment.

On the other hand, the thus dehydrated granules 62 are discharged through another outlet 72 for a secondary dehydration by a screen (not shown). After the secondary

- 17 -

dehydration, the used activated carbon granules are finally supplied into the hopper 18 of the restoring apparatus.

In case that the adsorption tower 61 is operated as a fluidized layer type adsorber, the restored or refreshed carbon granules flowing out from the outlet 51 of the restoring apparatus may be continuously returned to the upper opening of said tower. For this purpose, an air lift pipe or other suitable transportion pump may be utilized. Such arrangement will make it possible to automatically continue the raw sewage purification as well as the used carbon restoration. The secondary and/or tertiary treatment of sewage will become less expensive by virtue of the lesser loss of carbon and the lesser labors needed therefor.

The invented apparatus has various advantages as follows.

(i) The activated carbon granules are protected from pulverization so that the loss thereof is avoided while sufficiently being desorbed and reactivated.

(ii) The vapor quantity added for the reactivation can be regulated such that it is neither excessive nor defficient. Its intrusion into the desorption is favorably obstructed, thus the good contact of said granules with the electrodes being maintained to thereby save electricity for heating the granules.

(iii) Both the desorption and the reactivation can be conducted respectively at their optimal temperatures.

(iv) The advancing speed of granules can be determined to be adequate to each of said reactions executed in the apparatus.

(v) The apparatus can be made simpler in its structure as a whole.

WHAT IS CLAIMED

1.  An apparatus for restoring used activated carbon granules comprising an electrical heating means for desorbing substances adsorbed to the granules and a means for reactivating said granules, the apparatus including a desorption furnace as its primary section adapted to desorb said substance from the activated carbon granules and having a vibration mechanism for imparting a violent vibration to the granules that are wet and sticking to each other to thereby dissociate them from each other, and a reactivation furnace as its secondary section subsequent to the primary section, the reactivation furnace being adapted to reactivate the carbon granules within its space separated from the desorption furnace and provided with another vibration mechanism for imparting to said granules that have been dried and are not sticky a moderate vibration sufficient to cause them to rotate about their centers, the desorption furnace and the reactivation furnace also comprising respectively opposed electrode plates disposed in parallel with passages each formed as reaction chambers within the furnaces for advancing said granules under the influences exerted by the vibration mechanisms respectively, the electrode plates being adapted to be respectively charged with suitable voltages, the apparatus further including a device for ejecting water vapor into the reactivation furnace so as to gasify residual carbonized substances carried by said granules thereby giving rise to a reaction such as that occurs in the water gas production, an aseismatic duct connecting the desorption furnace with the reactivation furnace, and controllers
adapted respectively to control the charged voltages and
the strengths of said vibrations, the controls thereby being
conducted for each of the furnaces independently from each
other.

2. An apparatus as set forth in claim 1 wherein the desorption as the primary section comprising recesses disposed
at regular intervals and each having a semicircular cross
section taken along a direction in which said passage extends,
each two of the recesses being connected with one another
by a dam interposed therebetween, and the reactivation furnace
comprising a flat furnace bottom as well as a plurality of
baffles disposed at regular intervals.

3. An apparatus as set forth in claim 1 or 2, wherein the
desorption as the primary section is slanted with an inclination
of 5 to 20 degrees in respect of the horizontal line while
the reactivation as the secondary section being slanted
with an inclination of less than about 10 degrees in respect
of the horizontal line.

4. An apparatus as set forth in claim 1 or 2 wherein the
inclinations are adjustable in respect of the horizontal
line.

5. An apparatus as set forth in any of the claims 1 to 4
wherein the reactivation furnace further comprises a water

- 21 -

sealing device disposed in a pipe route discharging reactivated carbon granules.

FIG.1

FIG.2

FIG.3

# INTERNATIONAL SEARCH REPORT

International Application No PCT/JP81/00086

## I. CLASSIFICATION OF SUBJECT MATTER (if several classification symbols apply, indicate all) 3

According to International Patent Classification (IPC) or to both National Classification and IPC

Int. Cl.$^3$ C01B 31/08, B01J 20/34

## II. FIELDS SEARCHED

| Minimum Documentation Searched 4 | |
|---|---|
| Classification System | Classification Symbols |
| I P C | C01B 31/08, B01J 20/34 |

| Documentation Searched other than Minimum Documentation to the Extent that such Documents are Included in the Fields Searched 5 |
|---|
| Jitsuyo Shinan Koho      1955 - 1980 |

## III. DOCUMENTS CONSIDERED TO BE RELEVANT 14

| Category * | Citation of Document, 16 with indication, where appropriate, of the relevant passages 17 | Relevant to Claim No. 18 |
|---|---|---|
| A | JP, A, 50-86495,      1975-7-11 <br> Ebara-Infilko Kabushiki Kaisha | 1 - 5 |
| A | JP, A, 51-112497,      1976-10-4 <br> Berkwerks Ferband G.m.b.H. | 1 - 5 |
| A | JP, Y2, 54-28435,      1979-9-12 <br> Accord Mecha Kabushiki Kaisha | 1 - 5 |
| A | JP, Y2, 55-20727,      1980-5-19 <br> Mihara Kankyo Gijutsu Kabushiki Kaisha | 1 - 5 |

\* Special categories of cited documents: 15

"A" document defining the general state of the art

"E" earlier document but published on or after the international filing date

"L" document cited for special reason other than those referred to in the other categories

"O" document referring to an oral disclosure, use, exhibition or other means

"P" document published prior to the international filing date but on or after the priority date claimed

"T" later document published on or after the international filing date or priority date and not in conflict with the application, but cited to understand the principle or theory underlying the invention

"X" document of particular relevance

## IV. CERTIFICATION

| Date of the Actual Completion of the International Search 2 | Date of Mailing of this International Search Report 2 |
|---|---|
| April 22, 1981 (22.04.81) | May 11, 1981 (11.05.81) |
| International Searching Authority 1 | Signature of Authorized Officer 20 |
| Japanese Patent Office | |